(19) Europäisches Patentamt
European Patent Office
Office européen des brevets

(11) Veröffentlichungsnummer: **0 355 531**
**A2**

# (12) EUROPÄISCHE PATENTANMELDUNG

(21) Anmeldenummer: 89114449.5

(22) Anmeldetag: 04.08.89

(51) Int. Cl.⁴: **C08J 9/16 , C08J 9/232 , //C08L25:06**

(30) Priorität: 11.08.88 DE 3827238

(43) Veröffentlichungstag der Anmeldung:
28.02.90 Patentblatt 90/09

(84) Benannte Vertragsstaaten:
AT BE CH DE FR IT LI NL

(71) Anmelder: Grimm, Christian
Uthoffstrasse 44
D-4836 Herzebrock(DE)

(72) Erfinder: Grimm, Willibald
Am Wendelinusbrunnen 6
D-6951 Limbach-Wagenschwend(DE)

(74) Vertreter: Hach, Hans Karl, Dr.
Tarunstrasse 23
D-6950 Mosbach-Waldstadt(DE)

(54) Verfahren zur Herstellung von Formstücken aus aufschäumbarem Polystyrol.

(57) Zur Herstellung von Formstücken aus schwerem Polystyrolschaum wird von grobkörnigem, vorgeschäumtem Polystyrol ausgegangen.

EP 0 355 531 A2

# VERFAHREN ZUR HERSTELLUNG VON FORMSTÜCKEN AUS AUFSCHÄUMBAREM POLYSTYROL

Die Erfindung betrifft ein Verfahren zum Herstellen von geschäumten Formstücken aus aufschäumbarem Polystyrol, bei dem Körner aus ungeschäumtem Polystyrol zu einer losen Schüttung vorgeschäumt und abgelagert werden, dann eine stabile Form mit der losen Schüttung gefüllt und verschlossen wird und dann die lose Schüttung innerhalb der Form weiter formbildend ausgeschäumt wird, bis ein die Form vollständig ausfüllendes, zusammenhängenden Formstück gebildet ist, und Körnchen aus ungeschäumtem Polystyrol zur Ausübung dieses Verfahrens.

Die Dichte des erzielten Formstückes läßt sich variieren durch mehr oder weniger starkes Vorschäumen. Schäumt man nur wenig vor, dann ist das Formstück dichter. Dem sind aber bei einem bekannten Verfahren, das von feinstkörnigen Körnchen mit einem Volumen des einzelnen Korns von weniger als 0,2 mm³ austeht, enge Grenzen gesetzt und in der Praxis lassen sich einheitlich durchgeschäumte Formstücke mit einem spezifischen Gewicht von maximal 40 kg/m³ (Kilogramm pro Kubikmeter) erzielen.

Es sind aber höhere spezifische Gewichte wünschenswert, weil höheres spezifisches Gewicht bessere Druckfestigkeit, bessere Isolierwerte, höhere Wasserdichte, geringere Wasseraufnahme und höhere Dampfdiffusionswiderstandswerte, höhere Lichtdichte, schwerere Entflammbarkeit, höhere Verrottungsfestigkeit und höhere Formstabilität zur Folge hat. Zum Beispiel beim Einsatz als spezielles Baumaterial, für Verpackungsformteile, für Schwimmerschalter, für Surfbretter, für Rettungsreifen und dergleichen sind unter Umständen höhere Dichten als die mit dem bekannten Verfahren erzielbaren wünschenswert.

Es ist daher Aufgabe der Erfindung, ein Verfahren der eingangs genannten Art so auszugestalten, daß gleichmäßig durchgeschäumte Formstücke erzielbar sind mit einem spezifischen Gewicht von erheblich über 30 kg/m³.

Die Erfindung ist dadurch gekennzeichnet, daß zur Herstellung der Körner ungeschäumtes Polystyrol durch Erwärmen fließfähig gemacht wird, in fließfähigem Zustand mit 1 bis 6 % (Prozent), vorzugsweise 4,25 %, die Zellbildung und die Fließfähigkeit fördernden Chemikalien und gegebenenfalls mit 1 bis 5 %, vorzugsweise 4 %, Schwerentflammbarkeitsmittel versetzt und vermischt wird und dann extrudiert und durch Erkalten erhärtet wird zu die Körnchen bildenden Strangabschnitten von 1 bis 3 mm (Millimeter), vorzugsweise 2 mm, Länge und einem Volumen von 1 bis 4 mm³ (Kubikmillimeter), vorzugsweise 2 mm³.

Die nach der Erfindung hergestellten, groben Körnchen können genauso weiterverarbeitet werden wie die feinen Körnchen nach dem bekannten Verfahren, gestatten es aber, sehr viel höhere spezifische Gewichte, nämlich zwischen 30 und 100 kg/m³ und sogar noch darüber, zu erzielen. Wie hoch das spezifische Gewicht im fertigen Formstück liegt, das läßt sich, wie auch bei dem bekannten Verfahren, vorbestimmen durch das Ausmaß des Vorschäumens. Jedoch lassen sich nach der Erfindung beim Vorschäumen und damit auch beim formbildenden Ausschäumen Variationen in einem dem bekannten Verfahren nicht zugänglichen Bereich des spezifischen Gewichtes, nämlich 30 bis 100 kg/m³ und darüber, jeweils bezogen auf das Formstück, erzielen.

Bemerkenswert ist, daß die Erfindung die gestellte Aufgabe allein dadurch löst, daß besonders präparierte Körnchen eingesetzt werden. Im Anschluß daran kann die Weiterverarbei tung bis zum Formstück nach den gleichen Grundprinzipien wie beim bekannten Verfahren, insbesondere auch mit den gleichen Einrichtungen, erfolgen, so daß für die Anwendung des erfinderischen Verfahrens keine besonderen neuen Installationen getroffen werden müssen. Es werden lediglich die besonders präparierten Körnchen eingesetzt.

Gemäß einer Weiterbildung werden die Körnchen nur zu 20 bis 50 % ihrer minimalen Dichte vorgeschäumt. Die Körnchen können dabei alle im wesentlichen mit dem gleichen Prozentsatz vorgeschäumt werden. Den Vorschäumungsgrad kann man leicht durch die Zeitdauer der Vorschäumung oder die Intensität der zur Einwirkung kommenden Hitze und dergleichen bestimmen.

Besonders einfach kann man das erwünschte erhöhte spezifische Gewicht des Formstückes dadurch voreinstellen, daß die Körnchen beim Vorschäumen unterschiedlich stark geschäumt werdern und, bezogen auf ihren Schäumungsgrad, vermischt in die Form eingefüllt werden.

Man kann zu diesem Zweck verschiedene Chargen von vorgeschäumtem Granulat bereithalten, wobei die Vorschäumung in den einzelnen Chargen unterschiedlich ist. Beim Mischen der Chargen kann man dann durch die Beimischrate der einzelnen Chargen das spezifische Gewicht des fertigen Formstückes sehr einfach und auch sehr genau einstellen.

Man kann auch von vornherein hinsichtlich des Vorschäumungsgrades gemischtes, vorgeschäumtes Granulat herstellen. Das geschieht vorzugsweise dadurch, daß die Körnchen beim Vorschäumen in einem von unten nach oben von Wasserdampf durchströmten Schacht nach ihrer jeweils erreichten Dichte auf unterschiedlicher Höhe vom Wasserdampf mitgerissen werden und durch auf unterschiedlicher Höhe

2

gelegene Austragsschleusen mit entsprechend unterschiedlichem, der Höhenlage der betreffenden Austragsschleuse zugeordneten Aufschäumungsgrad abgezogen werden.

Vorzugsweise wird zur Herstellung der Körner feinstkörniges Polystyrol eingesetzt mit einem Gasgehalt von weniger als 4 % (Gewichtsprozent). Dabei handelt es sich produktionsbedingt um Pentan und/oder Frigen. Dieser Gasgehalt liegt bei dem einzusetzenden feinstkörnigen Polystyrol vorzugsweise im Bereich von 2,5 bis 4 %.

Die Erfindung betrifft auch Körnchen aus aufschäumbarem Polystyrol zur Herstellung von Formstücken aus Polystyrolschaum.

Zur Lösung der eingangs dargelegten Aufgabenstellung werden Körnchen eingesetzt, die gekennzeichnet sind durch einen Zusatz von zellbildenden und die Fließfähigkeit fördernden Chemikalien, umfassend 1 bis 6 %, vorzugsweise 4,25 %, und in Form von extrudierten Strangabschnitten von 1 bis 3 mm, vorzugsweise 2 mm, Länge und 1 bis 4 mm³, vorzugsweise 2 mm³, Volumen.

Mit dem Einsatz dieser Körnchen lassen sich die Vorteile erzielen, die oben in Verbindung mit dem erfinderischen Verfahren bereits erläutert sind.

· Die Erfindung wird nun anhand eines Verfahrensbeispiels näher erläutert.


VERFAHRENSBEISPIEL

Als Ausgangsmaterial wird handelsübliches, ungeschäumtes, durch Treibmittelzusatz aufschäumbares Polystyrol mit einer Korngröße von 0,2 bis 1 mm und mit einem Gasgehalt von maximal 4 % (Prozent), vorzugsweise 2,5 % bis 4 %, eingesetzt. Die Prozentangaben sind Gewichtsprozente.

Es wird eine Mischung gebildet aus:

| 1) zellbildende Chemikalien | 3,75 % | (2,00 bis 4,00 %) |
| 2) Gleitmittel | 0,50 % | (0,50 bis 1,00 %) |
| 3) Schwerentflammbarkeitsmittel | 4,00 % | (1,00 bis 5,00 %) |
| 4) Farbstoff | 0,01 % | (0,01 bis 0,02 %) |
| 5) Ausgangsmaterial Rest auf 100% | | |
| Summe | 100,00 % | |

Diese Mischung wird fließfähig gemacht durch Erwärmen auf eine Temperatur von 220°C (200 bis 220°C) und vermischt. Dann wird das Material durch Extrudieren und Erkalten zu Strangabschnitten ausgeformt. Die einzelnen Strangabschnitte haben runden Querschnitt und einen Durchmesser von 0,75 mm (0,50 bis 1,00 mm) und eine Länge von 2,00 mm (1,50 bis 3,00 mm).

Das so entstandene, grobkörnige Granulat wird von heißem Wasserdampf mit einer Temperatur von 100°C (90 bis 110°C) umspült und dadurch aufgeschäumt bis zu einer Dichte von 30 kg/m³ (30 bis 150 kg/m³), bevorzugte Alternative 70 kg/m³. Die Granulatteilchen haben nach dem Aufschäumen die Form von Linsen.

Das vorgeschäumte Granulat wird abgelagert und kühlt dabei ab. Dabei dampfen flüchtige Bestandteile aus. Der dadurch entstehende Unterdruck im Inneren der Granulatteilchen wird durch eindiffundierende Luft ausgeglichen. Das so gewonnene präparierte Granulat kann zur späteren Weiterverarbeitung aufbewahrt oder sofort weiterverarbeitet werden.

Zur Weiterverarbeitung wird das präparierte Granulat in loser Schüttung in eine vorbereitete, stabile Form, vorzugsweise aus Aluminium, eingefüllt, bis diese ganz voll ist. Die Form wird dann verschlossen und von heißem Wasserdampf mit einer Temperatur von 110°C (110 bis 120°C) durchströmt, bis sich der Inhalt zu einem massiven, homogenen, geschäumten Formstück verbunden hat, das die Form vollständig ausfüllt. Nach kurzer Abkühlzeit von 1/2 Minute (1/2 bis 1 Minute) wird das Formteil ausgeformt.

Das gewonnene Formteil hat ein spezifisches Gewicht so hoch wie das Schüttgewicht des präparierten Granulats, in diesem Beispiel also 30 kg/m³ (30 bis 150 kg/m³), bevorzugte Alternative 70 kg/m³.

Als Zusätze zu dem Ausgangsmaterial werden vorzugsweise, insbesondere bei dem oben angeführten Verfahrensbeispiel, eingesetzt:


1) als zellbildende Chemikalie:

1.1 Oppanol-Öl B 3 M (zu beziehen von der BASF AG, Ludwigshafen). Es handelt sich um ein niedermolekulares Polyisobutylen, eine klare, leicht gelblich gefärbte, viskose Flüssigkeit, die mit Mineralöl in jedem Verhältnis mischbar ist, charakterisiert wie folgt:

Viskosität nach DIN 51 562

| bei +20 °C | 30 000 - 35 000 mm²/s |
|---|---|
| bei +37,8 °C | 6 500 - 7 000 mm²/s |
| bei +50 °C | 2 500 - 3 000 mm²/s |
| bei +98,9 °C | 210 - 250 mm²/s = 27-33 °E |

Pourpoint nach DIN 51 597   ca.-9 °C
Flammpunkt nach DIN 51 584   190 - 200 °C
Noacktest nach DIN 51 581   ca. 25 %
Dichte 20 °C nach DIN 51 757   ca. 0,875 g/cm³
Brechungsindex n oberer Index "20" unterer Index "D"   1,48 - 1,49
Neutralisationszahl nach DIN 51 558   0,1 mgKOH/g
Molgewicht Mechrolab Dampfdruckosmometer Zahlenmittel   820
Jodzahl nach Kaufmann   ca. 50 gJod/100 g

1.2 Hydrocerol BIH, vorzugsweise BIH 70, (zu beziehen von Fa. Boehringer Ingelheim). Es handelt sich um ein endothermes Treibmittel, in Form eines weißen, feinen, gut dosierbaren Pulvers mit sehr guten Nukleierungseigenschaften. Der aktive Treibmittelanteil beträgt 70 % (Prozent). Als Träger ist niedrigmolekulares PE eingesetzt.

1.3 Azodicarbonamid

Bemerkung: Vorzugsweise werden die Positionen 1.1 und/oder 1.2 mit 1,75 % (1,50 bis 2,25 %) eingesetzt. Die Position 1.3 wird dann mit dem Restbetrag eingesetzt.

2. als Gleitmittel '

2.1 LUVOSLIP ESA/5 G-PE (zu beziehen von Fa. Lehmann & Voss & Co., Hamburg), charakterisiert wie folgt:
5 % Gehalt an Erucasäureamid = Wirkstoff
95 % Gehalt an Trägerstoff mit einem Polyolefinanteil, von 90 %,
Temperaturbeständigkeit bis circa 240°Celsius,
Schmelzpunkt, bezogen auf das Gleitmittel ca. 80°celsius
Schüttgewicht ca. 550g/l.

Erucasäureamid ist ein in der Praxis bewährtes Gleitmittel, das zur besseren Handhabung und zur Steigerung der Wirksamkeit als Masterbatch angeboten wird. Dieses wird vor der Verarbeitung mit den Thermoplasten gemischt. Während des Verarbeitungsprozesses wandert das Gleitmittel an die Oberfläche, um dort eine unsichtbare, nicht fettige und nicht klebrige Schicht zu bilden.

3. als Schwerentflammbarkeitsmittel

3.1 Hexabromocyclododecane ($C_{12}H_{18}Br_6$) (zu beziehen von Fa. Riedel-de Haen). Es handelt sich um ein kristallines, nahezu weißes Pulver. Das Molekulargewicht beträgt 641,70, die Schmelztemperatur beträgt 170-185 °C, der Gewichtsverlust nach dem Trocknen ist kleiner als 1 % und der Eisengehalt ist kleiner/gleich 10 ppm.

3.2 Antimontrioxid ($Sb_2O_3$) (zu beziehen von Fa. Lehmann & Voss & Co., Hamburg). Es handelt sich um ein kristallines, weißes Pulver mit folgenden Charakteristika:
Spezifisches Gewicht 5,2, Schüttgewicht ca. 1200 g/l; Rüttelgewicht ca. 2500 g/l; Weißgehalt ca. 87 %; Feuchtigkeit ca. 0,1 %; Schlämmrückstand nach DIN 1171 auf 16.900 Maschen/cm² = 40 My Maschenweite ca. 0,001, löslich in heißer Weinsäure min. 99,0 %.

Bemerkungen: Die Positionen 3.1 und 3.2 können jede für sich oder als Mischung, vorzugsweise im Verhältnis 1 : 3 bis 3 : 1 eingesetzt werden.

4. als Farbstoff

Es werden Farbstoffe eingesetzt, die vorzugsweise ungiftig sind und vorzugsweise auch beim Verbrennen keinerlei giftige oder sonst schädliche Gase absondern.

## Ansprüche

1. Verfahren zum Herstellen von geschäumten Formstücken aus aufschäumbarem Polystyrol, bei dem Körner aus ungeschäumtem Polystyrol zu einer losen Schüttung vorgeschäumt und abgelagert werden, dann eine stabile Form mit der losen Schüttung gefüllt und verschlossen wird und dann die lose Schüttung innerhalb der Form weiter formbildend ausgeschäumt wird, bis ein die Form vollständig ausfüllendes, zusammenhängenden Formstück gebildet ist, dadurch gekennzeichnet,
daß zur Herstellung der Körner ungeschäumtes Polystyrol durch Erwärmen fließfähig gemacht wird, in fließfähigem Zustand mit 1 bis 6 % (Prozent), vorzugsweise 4,25 %, die Zellbildung und die Fließfähigkeit fördernden Chemikalien und gegebenenfalls mit 1 bis 5 %, vorzugsweise 4 %, Schwerentflammbarkeitsmittel versetzt und vermischt wird und dann extrudiert und durch Erkalten erhärtet wird zu die Körnchen bildenden Strangabschnitten von 1 bis 3 mm (Millimeter), vorzugsweise 2 mm, Länge und einem Volumen von 1 bis 4 mm$^3$ (Kubikmillimeter), vorzugsweise 2 mm$^3$.

2. Verfahren nach Anspruch 1, dadurch gekennzeichnet,
daß die Körnchen nur zu 20 bis 50 % ihrer minimalen Dichte vorgeschäumt werden.

3. Verfahren nach Anspruch 2, dadurch gekennzeichnet, daß die Körnchen beim Vorschäumen unterschiedlich stark geschäumt werden und, bezogen auf ihren Schäumungsgrad, vermischt in die Form eingefüllt werden.

4. Verfahren nach Anspruch 3, dadurch gekennzeichnet,
daß die Körnchen beim Vorschäumen in einem von unten nach oben von Wasserdampf durchströmten Schacht nach ihrer jeweils erreichten Dichte auf unterschiedliche Höhe vom Wasserdampf mitgerissen werden und durch auf unterschiedlicher Höhe gelegene Austragsschleusen mit entsprechend unterschiedlichem, der Höhenlage der betreffenden Austragsschleuse zugeordneten Aufschäumungsgrad abgezogen werden.

5. Verfahren nach einem der vorhergehenden Ansprüche, dadurch gekennzeichnet,
daß zur Herstellung der Körner feinstkörniges Polystyrol eingesetzt wird mit einem Gasgehalt von höchstens 4 % (Gewichtsprozent).

6. Körnchen aus aufschäumbarem Polystyrol zur Herstellung von Formstücken aus Polystyrolschaum zur Ausübung des Verfahrens nach einem der vorhergehenden Ansprüche,
gekennzeichnet durch einen Zusatz von zellbildenden und die Fließfähigkeit fördernden Chemikalien, umfassend 1 bis 6 %, vorzugsweise 4,25 %, und in Form von extrudierten Strangabschnitten von 1 bis 3 mm, vorzugsweise 2 mm, Länge und 1 bis 4 mm$^3$, vorzugsweise 2 mm$^3$, Volumen.